(19) Europäisches Patentamt
European Patent Office
Office européen des brevets

(11) EP 0 716 127 B1

(12) **EUROPÄISCHE PATENTSCHRIFT**

(45) Veröffentlichungstag und Bekanntmachung des Hinweises auf die Patenterteilung:
**10.07.2002 Patentblatt 2002/28**

(51) Int Cl.$^7$: **C08L 83/04**

(21) Anmeldenummer: **95116083.7**

(22) Anmeldetag: **12.10.1995**

(54) **Organopolysiloxanhaltige Zusammensetzungen auf Wasserbasis, Verfahren zu deren Herstellung sowie deren Verwendung**

Waterborne organopolysiloxane-containing compositions, process for their preparation and their use

Compositions aqueuses contenant des organopolysiloxanes, leur procédé de préparation et utilisation

(84) Benannte Vertragsstaaten:
**AT BE CH DE DK ES FR GB IT LI NL SE**

(30) Priorität: **09.12.1994 DE 4443824**

(43) Veröffentlichungstag der Anmeldung:
**12.06.1996 Patentblatt 1996/24**

(73) Patentinhaber: **Degussa AG**
**40474 Düsseldorf (DE)**

(72) Erfinder:
- **Standke, Burkhard, Dr.**
**D-79540 Lörrach (DE)**
- **Frings, Albert, Dr.**
**D-79618 Rheinfelden (DE)**
- **Horn, Michael, Dr.**
**D-79618 Rheinfelden (DE)**
- **Kötzsch, Hans-Joachim, Dr.**
**D-79618 Rheinfelden (DE)**
- **Kropfgans, Frank, Dr.**
**D-79618 Rheinfelden (DE)**
- **Monkiewicz, Jaroslaw, Dr.**
**D-79618 Rheinfelden (DE)**
- **Seiler, Claus-Dietrich, Dr.**
**D-79618 Rheinfelden (DE)**
- **Steinmetz, Jim**
**Princeton, N.J. 08540 (US)**

(56) Entgegenhaltungen:
**EP-A- 0 138 192**
**EP-A- 0 590 270**
**US-A- 5 051 129**

- **PATENT ABSTRACTS OF JAPAN vol. 3, no. 142 (C-65), 24.November 1979 & JP 54 119597 A (NIPPON GENSHIRYOKU KENKYUSHO), 17.September 1979,**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft Organopolysiloxan-haltige Zusammensetzungen auf Wasserbasis, ein Verfahren zu deren Herstellung sowie deren Verwendung. Die erfindungsgemäßen Organopolysiloxan-haltigen Zusammensetzungen sind im wesentlichen frei von Lösemitteln. Unter lösemittelfreien Zusammensetzungen sind hier solche zu verstehen, die keine aliphatischen oder aromatischen Kohlenwasserstoffe, Halogenkohlenwasserstoffe, Glykole, Glykolether, Ether, Ketone, Ester, Amide und andere Stickstoff-Verbindungen sowie Schwefel- und Nitroverbindungen auf rein organischer Basis sowie Protonen-(bzw. Wasserstoff-)freie Lösemittel in Anteilen von mehr als 10 Gew.-ppm enthalten. Hingegen werden Protonen-haltige Agenzien, wie Wasser, anorganische oder organische Säuren, und Alkohole, wie Methanol, Ethanol, n- und i-Propanol sowie höhere Alkohole in dieser Reihe, nachfolgend nicht als organische Lösemittel angesehen.

Organosilane der allgemeinen Formel $R^0$ - Si $(OR^1)_3$, mit $R^0$ als organischem Rest und $R^1$ als Methyl- bzw. Ethyl-Rest, finden vielfältige Anwendungen, z. B. als Haftvermittler, Trennmittel, Rheologieverbesserer, Vernetzer, Hydrophobierungsmittel.

Aus ökologischen, arbeitssicherheitstechnischen und ökonomischen Gründen geht man immer mehr dazu über, ihre Applikation in wäßriger Form vorzunehmen. Hierbei treten in der Regel folgende Probleme auf:

- Durch Hydrolyse werden Alkohole freigesetzt:

$$R^0\text{-}Si(OR^1)_3 + 3\ H_2O \rightarrow R^0\text{-}Si(OH)_3 + 3\ R^1OH$$

  Freie Alkohole erniedrigen den Flammpunkt der Anwendungslösung, so daß explosionsgeschützte Maschinen und Spezialgeräte für die notwendigen Verarbeitungsschritte eingesetzt werden müssen. Aus toxikologischen Gründen müssen die mit dem Umgang betrauten Mitarbeiter zusätzlich geschult und geschützt werden. Ferner kann die Entsorgung der gebrauchten Anwendungslösung aufgrund der Hydrolysealkohole Schwierigkeiten bereiten. Spezielle Abwasserkläranlagen, aber auch Anlagen zur Abgas- bzw. Abluftnachbehandlung werden benötigt.

- Das in Wasser zu applizierende Organosilan ist nicht wasserlöslich:

$$R^0\text{-}Si(OR^1)_3 + 1{,}5\ H_2O \rightarrow R^0\text{-}SiO_{1,5} + 3\ R^1OH$$

  Das danach gebildete Hydrolysat R-$SiO_{1,5}$ fällt als polymeres Silikonharz aus dem Reaktionsgemisch aus, so daß es für die gewünschte Anwendung nicht mehr zur Verfügung steht. Organosilane mit sehr stark hydrophobem Charakter, wie z. B. Alkylalkoxysilane, insbesondere mit langem oder verzweigtem Kohlenstoffgerüst, hydrolysieren zwar nur sehr langsam, sind aber in Wasser nicht löslich.

Um die bekannten, zuvor beschriebenen Nachteile zu mildern, wurden in der zurückliegenden Zeit verschiedenste Verfahren angeregt:

Einige Organosilane, wie z. B. Aminoalkylalkoxysilane, sind zwar wasserlöslich, besitzen jedoch nur eingeschränkte Einsatzfähigkeit in den vielfältigen Einsatzmöglichkeiten organofunktioneller Silane. Die Einführung weiterer Funktionalitäten, insbesondere auf Basis an sich nicht wasserlöslicher Organosilane, wie beispielsweise Alkylalkoxysilane, z. B. Isobutyltrimethoxysilan, ist hier wünschenswert. Die Maßnahme der destillativen Entfernung von Hydrolysealkoholen während der Synthese für die Herstellung von Organosilan-Zubereitungen aus wasserlöslichen Organosilanen, wie z. B. aus 3-Aminopropyltriethoxysilan, ist bekannt. Wasserbasierende Aminosilansysteme mit geringem Alkoholanteil und ansonsten lösemittelfrei, sind auf diese Weise zugänglich und beispielsweise in Form von DYNASYLAN® 1151 marktgängig.

In der europäischen Patentanmeldung mit dem Titel "Method for preparation of stable water-borne silane compositions" (EP0675128) wird die Modifizierung derartiger wasserbasierender Organosilan-Zubereitungen mit geringen Mengen an sich nicht wasserlöslichen Organosilanen, wie beispielsweise Methyltrimethoxysilan oder Vinyltrimethoxysilan, beschrieben. Nach diesem Verfahren ist ein molares Verhältnis der nicht wasserlöslichen Komponente zu der wasserlöslichen Komponente von 1 : 2,5 erreichbar. Bei einem höheren Anteil nicht wasserlöslicher Silane bilden sich hochviskose Produkte, die mit der Zeit gelieren. Die Anwendungseigenschaften entsprechen im wesentlichen denen der zuvor genannten, wasserbasierenden Organosilan-Zubereitungen. Nicht zugänglich nach diesem Verfahren sind über Monate stabile wäßrige Lösungen mit höheren Anteilen nicht wasserlöslicher Organosilane, beispielsweise Methyltrimethoxysilan oder Vinyltrimethoxysilan. Die Herstellung von wäßrigen Lösungen stark hydrophober

Silane, wie z. B. Isobutyltrimethoxysilan, ist auf diese Weise unmöglich.

Bei der ebenfalls zum Stand der Technik gehörenden Emulsionsmethode wird das an sich nicht wasserverträgliche Organosilan in flüssiges, nicht wasserlösliches Silikonharz unter Zuhilfenahme von Emulgatoren in Wasser emulgiert (EP-A2 0 442 098, EP-B1 0 358 652, US 4 620 878). Nachteilig ist hier, daß die Produkte merkliche Anteile Tenside als Emulgatoren enthalten sowie erhebliche Mengen Alkohol freisetzen können.

Die Zubereitung von Silan-Kombinationen in Wasser wird in der US-Patentschrift 5 073 195 offenbart. Die Silan-Zubereitungen werden aus einem nicht wasserlöslichen Alkyltrialkoxysilan und einem wasserlöslichen Silan, wie z. B. einem Aminoalkylalkoxysilan, in einem molaren Verhältnis zwischen 1 : 2 bis 3 : 1 hergestellt. Wie den Beispielen der US-Patentschrift zu entnehmen ist, erfolgt die Herstellung der Zubereitungen durch eine unterstöchiometrische Hydrolyse des Silangemisches und Strippen der Reaktionsmischung bei 60 °C unter vermindertem Druck, für nachfolgende Anwendungen werden so erhaltene Silan-Zubereitungen auch mit Wasser verdünnt. Durch das Verdünnen mit Wasser erfolgt aber die Abspaltung der bei der unvollständigen Hydrolyse verbleibenden Alkoxygruppen in Form der entsprechenden Alkohole. Die hier offenbarten Silan-Cohydrolysate enthalten somit freie Alkohole in deutlichen Mengen und können darüber hinaus weitere Mengen Alkohol durch Hydrolyse freisetzen, wodurch die Anwendungseigenschaften der Produkte nachteilig beeinflußt werden.

Der Erfindung liegt daher die Aufgabe zugrunde, im wesentlichen lösemittelfreie Organosilan-Zubereitungen auf Wasser-Basis zu entwickeln, die einen möglichst geringen Gehalt an freien Alkoholen aufweisen, einen möglichst hohen Flammpunkt besitzen und beim Verdünnen mit Wasser im wesentlichen keine Alkohole durch Hydrolyse freisetzen.

Es wurde nun überraschenderweise gefunden, daß im wesentlichen lösemittelfreie Organopolysiloxan-haltige Zusammensetzungen auf Wasserbasis mit sehr guten anwendungstechnischen Eigenschaften erhältlich sind, wenn man nicht wasserlösliche Organosilane der allgemeinen Formel II mit wasserlöslichen Organosilanen der allgemeinen Formel I in einem molaren Verhältnis M, d. h. bezogen auf die nicht wasserlöslichen Organotrialkoxysilane, zu Q, d. h. bezogen auf die wasserlöslichen Aminoalkylalkoxysilane, von $0 < M/Q \leq 2$ mischt, das Gemisch mit Wasser versetzt, den pH-Wert der Reaktionsmischung auf einen Wert zwischen 1 und 8 einstellt sowie bereits vorhandenen bzw. den bei der Umsetzung entstandenen Alkohol destillativ abtrennt. Bevorzugt gibt man während der destillativen Abtrennung des Alkohols Wasser in dem Maße zu, wie Alkohol bzw. Alkohol/Wasser-Gemisch aus dem Reaktionsmedium entfernt wird. Zum Einstellen des pH-Wertes sind einbasige Säuren besonders geeignet. So hergestellte Produkte setzen auch bei Verdünnen mit Wasser keine weiteren Alkohole durch Hydrolyse frei und weisen einen Flammpunkt von deutlich mehr als 70 °C auf.

Gegenstand der vorliegenden Erfindung sind daher Organopolysiloxan-haltige Zusammensetzungen auf Wasserbasis, die im wesentlichen frei von organischen Lösemitteln sind, einen Flammpunkt von mehr als 70 °C besitzen, bei Verdünnen mit Wasser im wesentlichen keine Alkohole durch Hydrolyse freisetzen, wobei der Alkohol-Gehalt in den Zusammensetzungen weniger als 5 Gew.-% beträgt, und erhältlich sind durch

- Mischen von Q Molen wasserlöslicher Aminoalkylalkoxysilane der allgemeinen Formel I

$$R - Si\,(R^1)_y\,(OR^{1^*})_{3-y} \qquad (I)$$

mit M Molen nicht wasserlöslicher Alkylalkoxysilane der allgemeinen Formel II

$$R^2 - Si\,(OR^{1^{**}})_3 \qquad (II),$$

wobei R eine aminofunktionelle organische Gruppe der allgemeinen Formel III

$$[Z_{(f+c\cdot f^*)}]^{(f+c\cdot f^*)-}[A_dNH_{(2+f-d)}\text{-}[(CH_2)_a\text{-}NA^1{}_eH_{(1-e+f^*)}\text{-}]_c(CH_2)_b\text{-}]^{(f+c\cdot f^*)+} \qquad (III),$$

wobei $1 \leq a \leq 6$, $1 \leq b \leq 6$, $0 \leq c \leq 6$, $0 \leq d \leq 2$, $0 \leq e \leq 1$, $0 \leq f \leq 1$, $0 \leq f^* \leq 1$ ist,
A und $A^1$ einen Benzyl- oder Vinylbenzyl-Rest darstellen, N ein Stickstoffatom symbolisiert und Z ein einwertiger anorganischer oder organischer Säurerest ist,

$R^1$, $R^{1*}$ und $R^{1**}$ einen Methyl- oder Ethyl-Rest und
$R^2$ einen linearen oder cyclischen oder verzweigten Alkylrest mit 1 bis 6 C-Atomen oder eine Ureido-Alkylgruppe der allgemeinen Formel IV

$$NH_2 - CO - NH - (CH_2)_b - , \text{ mit } 1 \leq b \leq 6, \qquad (IV)$$

darstellt und
$0 \leq y \leq 1$ ist,

- in dem molaren Verhältnis $0 < M/Q \leq 2$,
- Versetzen des Gemisches mit Wasser,
- Einstellen des pH-Wertes der Reaktionsmischung auf einen Wert zwischen 1 und 8 und
- Entfernen des bereits vorhandenen und/oder bei der Umsetzung entstandenen Alkohols.

Nach gängigen Modellvorstellungen über monomere, oligomere, polymere sowie copolymere Kondensationsprodukte können solche auch in einem wäßrigen System als Ergebnis einer Hydrolysereaktion nicht wasserlöslicher und wasserlöslicher Organosilane entstehen.

So können in den erfindungsgemäßen Organopolysiloxan-haltigen Zusammensetzungen z. B. lineare Cokondensate der allgemeinen Formel

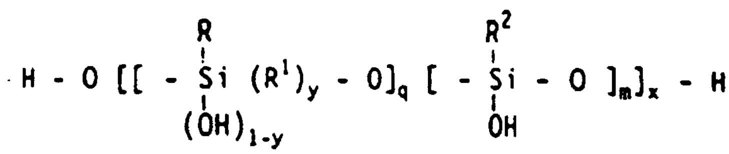

und/oder cyclische Cokondensate der allgemeinen Formel

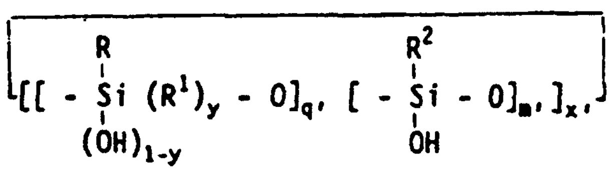

und/oder lineare Kondensate der allgemeinen Formel

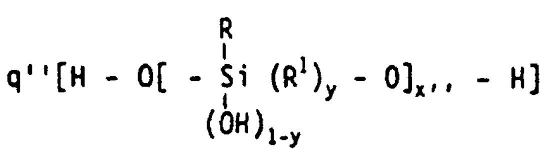

und/oder lineare Kondensate der allgemeinen Formel

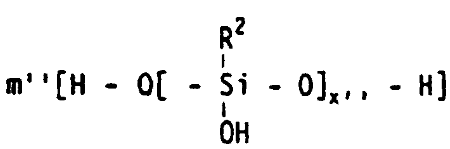

und/oder cyclische Kondensate der allgemeinen Formel

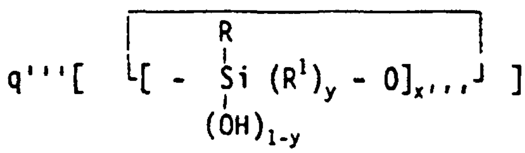

und/oder cyclische Kondensate der allgemeinen Formel

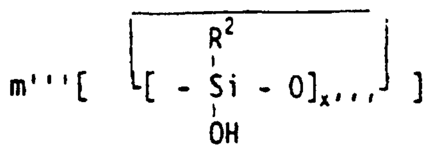

und/oder Silanole der allgemeinen Formel

$$q''''[R - Si (R^1)_y (OH)_{3-y}]$$

und/oder Silanole der allgemeinen Formel

$$m''''[R^2 - Si (OH)_3]$$

enthalten sein,
wobei R z. B. eine aminofunktionelle organische Gruppe der allgemeinen Formel

$$[Z_{(f+c\cdot f^*)}]^{(f+c\cdot f^*)-}[A_dNH_{(2+f-d)}-[(CH_2)_a-NA^1{}_eH_{(1-e+f^*)}-]_c(CH_2)_b-]^{(f+c\cdot f^*)+} ,$$

wobei $1 \le a \le 6$, $1 \le b \le 6$, $0 \le c \le 6$, $0 \le d \le 2$, $0 \le e \le 1$, $0 \le f \le 1$, $0 \le f^* \le 1$
und
A und $A^1$ einen Benzyl- oder Vinylbenzyl-Rest, N ein Stickstoffatom und Z ein einwertiger anorganischer oder organischer Säurerest, wie z. B. $Cl^-$, $NO_3^-$, $HCOO^-$, $CH_3COO^-$, sein kann,

wobei $R^1$ z. B. einen Methyl- oder Ethyl-Rest und
$R^2$ z. B. einen linearen oder cyclischen oder verzweigten Alkylrest mit 1 bis 6 C-Atomen oder eine Ureido-Alkylgruppe der allgemeinen Formel

$$NH_2 - CO - NH - (CH_2)_b - , \text{ mit } 1 \le b \le 6,$$

darstellen kann,
$0 \le y \le 1$ sein kann,
x, x', x'', x''', x'''' in der Verteilung der Polymeren Werte zwischen 1 und 20 besitzen können und

die Verhältniszahl M/Q z. B. zwischen 0 und 2 liegen kann,
worin Q die Summe aus q + q' + q'' + q''' + q'''' und
M die Summe aus m + m' + m'' + m''' + m'''' sein kann.

Ferner ist Gegenstand der vorliegenden Erfindung ein Verfahren zur Herstellung von Organopolysiloxan-haltigen Zusammensetzungen nach den Ansprüchen 1 bis 4, das dadurch gekennzeichnet ist, daß man

- Q Mole wasserlöslicher Aminoalkylalkoxysilane der allgemeinen Formel I

$$R - Si (R^1)_y (OR^{1*})_{3-y} \quad (I)$$

mit M Molen nicht wasserlöslicher Alkylalkoxysilane der allgemeinen Formel II

$$R^2 - Si (OR^{1**})_3 , \quad (II)$$

wobei R eine aminofunktionelle organische Gruppe der allgemeinen Formel III

$$[Z_{(f+c\cdot f^*)}]^{(f+c\cdot f^*)-}[A_dNH_{(2+f-d)}-[(CH_2)_a-NA^1{}_eH_{(1-e+f^*)}-]_c(CH_2)_b-]^{(f+c\cdot f^*)+} \quad (III),$$

wobei $1 \leq a \leq 6$, $1 \leq b \leq 6$, $0 \leq c \leq 6$, $0 \leq d \leq 2$, $0 \leq e \leq 1$, $0 \leq f \leq 1$, $0 \leq f^* \leq 1$ ist,
A und $A^1$ einen Benzyl- oder Vinylbenzyl-Rest darstellen, N ein Stickstoffatom symbolisiert und Z ein einwertiger anorganischer oder organischer Säurerest ist, wie z. B. $Cl^-$, $NO_3^-$, $HCOO^-$, $CH_3COO^-$,

$R^1$, $R^{1*}$ und $R^{1**}$ einen Methyl- oder Ethyl-Rest und
$R^2$ einen linearen oder cyclischen oder verzweigten Alkylrest mit 1 bis 6 C-Atomen oder eine Ureido-Alkylgruppe der allgemeinen Formel IV

$$NH_2 - CO - NH - (CH_2)_b - , \text{ mit } 1 \leq b \leq 6, \quad (IV)$$

darstellt und
$0 \leq y \leq 1$ ist,

- in dem molaren Verhältnis $0 < M/Q \leq 2$ mischt,
- das Gemisch mit Wasser versetzt,
- den pH-Wert der Reaktionsmischung auf einen Wert zwischen 1 und 8 einstellt,
- den bereits vorhandenen und/oder bei der Umsetzung entstandenen Alkohol entfernt.

Gegenstand der vorliegenden Erfindung ist darüber hinaus die bevorzugte Verwendung der Organopolysiloxan-haltigen Zusammensetzungen auf Wasserbasis nach den Ansprüchen 1 bis 14 für die Hydrophobierung von Oberflächen, für die Hydrophobierung von mineralischen Baustoffen, für den Schutz von Bauten und Fassaden, für die Beschichtung von Glasfasern, für die Silanierung von Füllstoffen, als Haftvermittler, insbesonders für die Verbesserung der Haftung organischer Polymerer auf anorganischen Oberflächen, als Trennmittel, für die Verbesserung der rheologischen Eigenschaften, insbesondere von Polymerdispersionen und Emulsionen, für die Hydrophobierung von Textilien, Leder, Zellulose- und Stärkeprodukten, als Vernetzer, als Zusatzstoff für Farben und Lacke.
Die erfindungsgemäßen Organopolysiloxan-haltigen Zusammensetzungen sind im wesentlichen frei von organischen Lösemitteln, können aber geringe Mengen an Alkoholen, insbesondere Methanol und/oder Ethanol, enthalten. Der Alkohol-Gehalt in den erfindungsgemäßen Organosiloxan-haltigen Zusammensetzungen beträgt vorzugsweise weniger als 5 Gew.-%, besonders vorzugsweise weniger als 1,5 Gew.-% und ganz besonders vorzugsweise weniger als 0,5 Gew.-%.
Die erfindungsgemäßen Organopolysiloxan-haltigen Zusammensetzungen weisen vorzugsweise einen pH-Wert zwischen 1 und 8, besonders vorzugsweise einen pH-Wert zwischen 3 und 6, ganz besonders vorzugsweise einen pH-Wert zwischen 3 und 5, auf. Geeigneterweise enthalten diese eine einwertige anorganische und/oder organische Säure und/oder deren Folgeprodukte. Unter Folgeprodukten versteht man hier Verbindungen wie Alkalihalogenide, insbesondere Natrium- oder Kaliumchlorid, Alkaliacetate, Alkaliformiate, Alkalinitrate oder Verbindungen der Aminogruppierungen in den Organopolysiloxanen mit anorganischen oder organischen Säure-Resten, wie sie der allgemeinen Formel III zu entnehmen sind.
Bedingt durch eine vorteilhafte Teilmaßnahme bei der Herstellung können die erfindungsgemäßen Organopolysiloxan-haltigen Zusammensetzungen einen Entschäumer, vorzugsweise eine Silikonharz-Suspension, enthalten.
Das Verfahren zur Herstellung der erfindungsgemäßen Organosiloxan-haltigen Zusammensetzungen kann wie nachfolgend detailliert beschrieben durchgeführt werden:
Zunächst werden wasserlösliche Organosilane der allgemeinen Formel I mit nicht wasserlöslichen Organosilanen der allgemeinen Formel II gemischt. Anschließend kann man das Reaktionsgemisch mit Wasser versetzen,

vorzugsweise mit 0,5 bis 30 Mole Wasser, besonders vorzugsweise mit 1 bis 5 Mole Wasser pro Mol der eingesetzten Aminoalkylalkoxysilane der allgemeinen Formel I und der Organosilane der allgemeinen Formel II. Die Wasserzugabe erfolgt vorzugsweise portionsweise mit zeitlichen Unterbrechungen. Man kann den Vorgang der Wasserdosierung aber auch kontinuierlich mit zeitlichen Unterbrechungen durchführen oder die diskontinuierliche und kontinuierliche Vorgehensweise der Wasserdosierung miteinander in geeigneter Weise kombinieren. Man kann auch so vorgehen, daß man eine der obengenannten Organosilankomponenten vorlegt, die Wasserdosierung vornimmt, die andere Organosilankomponente nachfolgend zugibt und anschließend - soweit noch erforderlich - Wasser nachdosiert.

Geeigneterweise wird der pH-Wert der Reaktionsmischung auf einen Wert zwischen 1 und 8, vorzugsweise auf einen Wert zwischen 3 und 6, besonders vorzugsweise auf einen Wert zwischen 3 und 5, eingestellt. Die Dosierung der Säure kann zusammen mit der Wasserdosierung oder auch separat erfolgen. Dem Reaktionsgemisch wird im allgemeinen eine anorganische oder organische Säure, vorzugsweise eine einbasige Säure, besonders vorzugsweise Salpetersäure oder Salzsäure oder Essigsäure oder Ameisensäure, zugegeben.

Die Umsetzung wird im allgemeinen in einem Temperaturbereich zwischen 0 und 100 °C, vorzugsweise in einem Temperaturbereich zwischen 10 und 80 °C und besonders vorzugsweise zwischen 20 und 60 °C, durchgeführt. Geeigneterweise erfolgt die Umsetzung unter Rühren.

Der bereits vorhandene und/oder bei der Umsetzung entstandene Alkohol wird im allgemeinen aus dem Reaktionsgemisch entfernt. Vorzugsweise wird der bereits vorhandene und/oder bei der Umsetzung entstandene Alkohol destillativ entfernt und dabei gleichzeitig Wasser in dem Maße zugegeben, wie Alkohol aus dem Reaktionsgemisch entfernt wird. Die destillative Abtrennung des Alkohols wird vorzugsweise unter vermindertem Druck durchgeführt. Die destillative Abtrennung des Alkohols wird vorzugsweise solange durchgeführt, bis im Kopf der Kolonne eine Temperatur erreicht ist, die der Siedetemperatur von Wasser entspricht.

Eine Einstellung des pH-Wertes im Reaktionsmedium kann durch Zugabe einer organischen oder anorganischen, insbesondere einer einwertigen Säure auch während und/oder nach der destillativen Abtrennung der Alkohole erfolgen.

Bei dem erfindungsgemäßen Verfahren wird der Restgehalt an Alkohol in den Organopolysiloxan-haltigen Zusammensetzungen vorzugsweise auf kleiner 5 Gew.-%, besonders vorzugsweise auf kleiner 1,5 Gew.-%, ganz besonders vorzugsweise auf kleiner 0,5 Gew.-%, eingestellt.

Zur Verminderung der Schaumbildung wird vor und/oder während der destillativen Abtrennung des Alkohols vorzugsweise ein Entschäumer, besonders vorzugsweise eine wäßrige Silikonharz-Suspension, zugesetzt.

Manchmal treten während oder nach Beendigung der Destillation im Produkt Trübungen oder Ausfällungen auf, diese rühren vielfach von dem zugesetzten Entschäumer her. Um ein klares Produkt zu erhalten, wird geeigneterweise das erhaltene Produkt nach der destillativen Abtrennung des Alkohols durch Sedimentation und/oder Filtration nachgereinigt. Die Filtration sowie die Entfernung des Sediments kann beispielsweise über eine Drucknutsche, einen Separator, einen Dekanter oder ähnliche Apparate erfolgen.

Nach dem erfindungsgemäßen Verfahren hergestellte Produkte sind stabile und klare Lösungen. Die erfindungsgemäßen Organopolysiloxan-haltigen Zusammensetzungen lassen sich mit Wasser in jedem Verhältnis verdünnen, entwickeln bei Wasserzugabe im wesentlichen keine Hydrolysealkohole, besitzen einen Flammpunkt von mehr als 70 °C, vorzugsweise von mehr als 95 °C, besonders vorzugsweise von mehr als 98 °C, und sind im wesentlichen frei von organischen Lösemitteln sowie Tensiden als Emulgatoren.

Die Verwendung der erfindungsgemäßen bzw. erfindungsgemäß hergestellten Produkte erfolgt mit deutlichen Vorteilen gegenüber Produkten des relevanten Standes der Technik, insbesondere für die Hydrophobierung von Oberflächen, z. B. bei der Imprägnierung von Leder und Textilien aus natürlichen und/oder künstlichen Materialien sowie im Bereich der organischen und mineralischen Baustoffe und des Bautenschutzes.

Die Erfindung wird durch die folgenden Beispiele näher erläutert:

## Beispiele

Reaktionsapparatur für alle nachfolgenden Beispiele einschließlich Vergleichsbeispiel:

Laborrührkesselreaktor mit 2 l Inhalt, temperierbar, Innentemperaturmessung, Flüssigkeitsdosiereinrichtung, Destillationsbrücke mit Kopftemperaturmessung, Produktkühler, Destillatvorlagebehälter; Labordrucknutsche (2 l Inhalt).

Folgende Verfahrensparameter gelten für alle nachfolgenden Beispiele einschließlich Vergleichsbeispiel:

Schäumungsprobleme während der Destillation können verhindert werden, indem der Reaktionslösung einige Tropfen eines handelsüblichen Entschäumers auf Basis wäßriger Silikonharzemulsionen zugesetzt werden. Die aus dem Zusatz von Entschäumer resultierende leichte Trübung kann durch Filtration über eine Drucknutsche mit Glasfaserfilter (Porenweite < 1 µm) entfernt werden.

Die in den erfindungsgemäßen Beispielen 1 bis 8 gewonnenen Produkte haben folgende Eigenschaften gemeinsam:

Das Produkt ist klar und in jedem Verhältnis mit Wasser mischbar. Der Gehalt an Alkoholen liegt bei weniger als 0,5 Gew.-%. Der Flammpunkt der Produkte liegt bei Werten > 95 °C und sinkt auch nicht bei weiterem Verdünnen mit Wasser, da keine weitere Hydrolyse stattfindet und somit keine weiteren Alkohole freigesetzt werden.

**Beispiel 1:** Herstellung eines wasserlöslichen Cohydrolysates aus Aminopropyltriethoxysilan (AMEO) und Methyltriethoxysilan (MTES) im molaren Verhältnis 1 : 1

In der oben beschriebenen Apparatur werden 221 g AMEO und 178 g MTES gemischt und 54 g Wasser zugegeben. Nach einer halben Stunde gibt man unter Rühren weitere 126 g Wasser innerhalb von 15 Minuten über die Dosiervorrichtung hinzu. Die Temperatur steigt hierbei von 20 °C auf ca. 50 °C. Innerhalb weiterer 15 Minuten wird über die Dosiervorrichtung 114 g HCl (32 Gew.-% in Wasser) unter Rühren zudosiert. Innerhalb von ca. 4 h wird bei einer Sumpftemperatur von ca. 60 °C bei einem Druck von ca. 135 mbar ein Ethanol/Wasser-Gemisch abdestilliert, bis die Kopftemperatur ca. 50 °C beträgt und das Kopfprodukt nur noch Wasser enthält. Während der Destillation wird Wasser über die Dosiereinrichtung mengenmäßig in dem Maße dem Produkt zugeführt, wie mengenmäßig Destillat entfernt wird.

**Beispiel 2:**

Wie Beispiel 1, mit dem Unterschied, daß zur pH-Einstellung 60 g Essigsäure anstelle der wäßrigen HCl verwendet wird.

**Beispiel 3:** Herstellung eines wasserlöslichen Cohydrolysats aus AMEO und Propyltrimethoxysilan (PTMO) im molaren Verhältnis 1 : 1

In der oben beschriebenen Apparatur werden 221 g AMEO und 164 g PTMO gemischt und 54 g Wasser zugegeben. Nach einer halben Stunde gibt man unter Rühren weitere 126 g Wasser innerhalb von 15 Minuten über die Dosiervorrichtung hinzu. Die Temperatur steigt hierbei von 20 °C auf ca. 57 °C. Innerhalb weiterer 15 Minuten wird über die Dosiervorrichtung 114 g HCl (32 Gew.-% in Wasser) unter Rühren zudosiert. Innerhalb von ca. 4 h wird bei einer Sumpftemperatur von bis zu 102 °C bei Normaldruck ein Ethanol/-Methanol/Wasser-Gemisch abdestilliert, bis die Kopftemperatur ca. 100 °C beträgt und das Kopfprodukt nur noch Wasser enthält. Während der Destillation wird Wasser über die Dosiereinrichtung mengenmäßig in dem Maße dem Produkt zugeführt, wie mengenmäßig Destillat entfernt wird.

**Beispiel 4:** Herstellung eines wasserlöslichen Cohydrolysates aus AMEO und Vinyltrimethoxysilan (VTMO) im molaren Verhältnis 1 : 1

In der oben beschriebenen Apparatur werden 221 g AMEO und 164 g VTMO gemischt und 54 g Wasser zugegeben. Nach einer halben Stunde gibt man unter Rühren weitere 126 g Wasser innerhalb von 15 Minuten über die Dosiervorrichtung hinzu. Die Temperatur steigt hierbei von 20 °C auf ca. 57 °C. Innerhalb weiterer 15 Minuten wird über die Dosiervorrichtung 114 g HCl (32 Gew.-% in Wasser) unter Rühren zudosiert. Innerhalb von ca. 4 h wird bei einer Sumpftemperatur von bis zu 102 °C bei Normaldruck ein Ethanol/-Methanol/Wasser-Gemisch abdestilliert, bis die Kopftemperatur ca. 100 °C beträgt und das Kopfprodukt nur noch Wasser enthält. Während der Destillation wird Wasser über die Dosiereinrichtung mengenmäßig in dem Maße dem Produkt zugeführt, wie mengenmäßig Destillat entfernt wird.

**Beispiel 5:** Herstellung eines wasserlöslichen Cohydrolysates aus AMEO und Isobutyltrimethoxysilan (IBTMO) im molaren Verhältnis 1 : 1

In der oben beschriebenen Apparatur werden 221 g AMEO und 178 g IBTMO gemischt und 54 g Wasser zugegeben. Nach einer halben Stunde gibt man unter Rühren weitere 64 g Wasser innerhalb von 15 Minuten über die Dosiervorrichtung hinzu. Die Temperatur steigt hierbei von 20 °C auf ca. 60 °C. Innerhalb weiterer 15 Minuten wird über die Dosiervorrichtung 110 g HCl (33 Gew.-% in Wasser) unter Rühren zudosiert. Innerhalb von ca. 4 h wird bei einer Sumpftemperatur von bis zu 52 °C bei einem Druck von 130 mbar ein Ethanol/Methanol/Wasser-Gemisch abdestilliert, bis die Kopftemperatur ca. 50 °C beträgt und das Kopfprodukt nur noch Wasser enthält. Während der Destillation wird Wasser über die Dosiereinrichtung mengenmäßig in dem Maße dem Produkt zugeführt, wie mengenmäßig Destillat entfernt wird.

**Beispiel 6:** Herstellung eines wasserlöslichen Cohydrolysates aus 3-Aminopropylmethyldimethoxysilan (Methyl-AMEO) und MTES im molaren Verhältnis 1 : 1

In der oben beschriebenen Apparatur werden 191 g Methyl-AMEO und 178 g MTES gemischt und 54 g Wasser zugegeben. Nach einer halben Stunde fügt man unter Rühren eine Mischung von 64 g Wasser und 110 g HCl (33 Gew.-% in Wasser) innerhalb von 30 Minuten über die Dosiervorrichtung hinzu. Die Temperatur steigt hierbei von 20 °C auf bis zu ca. 65 °C. Innerhalb von ca. 4 h wird bei einer Sumpftemperatur von bis zu 52 °C bei einem Druck von 130 mbar ein Ethanol/Wasser-Gemisch abdestilliert, bis die Kopftemperatur ca. 50 °C beträgt und das Kopfprodukt nur noch Wasser enthält. Während der Destillation wird Wasser über die Dosiereinrichtung mengenmäßig in dem Maße dem Produkt zugeführt, wie mengenmäßig Destillat entfernt wird.

**Beispiel 7:** Herstellung eines wasserlöslichen Hydrolysates aus N-Benzylaminoethylaminopropyltrimethoxysilan (DYNASYLAN® 1160)

In der oben beschriebenen Apparatur werden 400 g DYNASYLAN® 1160 (50 Gew.-% Silanlösung in Methanol, Hersteller Hüls AG) vorgelegt und 25 g Wasser zugegeben. Da es sich bei dem eingesetzten Silan um eine 50 gew.-%ige Silanlösung in Methanol handelt, werden zunächst 100 g Methanol destillativ entfernt (Sumpftemperatur 60 °C, Druck von 300 mbar, auf < 1 mbar fallend). Anschließend werden bei 40 bis 45 °C 49,5 g Essigsäure in das methanolfreie, viskose Silan dosiert. Innerhalb von 15 Minuten wird über die Dosiervorlage bei einer Sumpftemperatur von 50 °C 375 g Wasser zugefügt. Innerhalb von 3 h wird bei einer maximalen Sumpftemperatur von 55 °C und einem von 300 auf 130 mbar fallenden Druck 250 g Methanol/Wasser-Gemisch abdestilliert. Während der Destillation wird Wasser über die Dosiereinrichtung mengenmäßig in dem Maße dem Produkt zugeführt, wie mengenmäßig Destillat entfernt wird.

**Beispiel 8:** Herstellung eines wasserlöslichen Hydrolysates aus Ureidopropyltrimethoxysilan (DYNASYLAN® 2201) und Aminopropyltriethoxysilan (AMEO)

In der oben beschriebenen Apparatur werden 400 g DYNASYLAN® 2201 (50 Gew.-%ige Lösung von Ureidopropyltriethoxysilan in Methanol, Hersteller Hüls AG) und 200 g AMEO vorgelegt und 50 g Wasser zugegeben. Bei einer Sumpftemperatur von 60 °C werden bei vermindertem Druck - 300 mbar auf < 1 mbar fallend - 200 g Methanol/Ethanol-Gemisch abdestilliert. Über die Dosiervorlage werden innerhalb von 10 Minuten bei einer auf 80 °C steigenden Sumpftemperatur 550 g Wasser zugeführt. Bei Umgebungsdruck wird solange ein Methanol/Ethanol/Wasser-Gemisch abdestilliert, bis die Kopftemperatur konstant 100 °C beträgt. Während der Destillation wird Wasser über die Dosiereinrichtung mengenmäßig in dem Maße dem Produkt zugeführt, wie mengenmäßig Destillat entfernt wird.

**Vergleichsbeispiel 1:** Herstellung eines Silancohydrolysates (vgl. hierzu Beispiel 1)

In der oben beschriebenen Apparatur werden 221 g AMEO und 178 g MTES gemischt. Über die Dosiervorrichtung fügt man unter Rühren 626 g Wasser innerhalb von 30 Minuten hinzu. Die Temperatur steigt hierbei von 20 °C auf ca. 50 °C, das Produktgemisch (pH > 10) wird zwischenzeitlich trübe und zweiphasig. Innerhalb von ca. 4 h wird bei einer Sumpftemperatur von ca. 60 °C bei einem Druck von ca. 135 mbar ein Ethanol/Wasser-Gemisch abdestilliert, bis die Kopftemperatur ca. 50 °C beträgt und das Kopfprodukt nur noch Wasser enthält. Während der Destillation wird Wasser über die Dosiereinrichtung mengenmäßig in dem Maße dem Produkt zugeführt, wie mengenmäßig Destillat entfernt wird. Das Produkt ist hochviskos und weist starke Ausfällungen auf.

**Vergleichsbeispiel 2:** Silancohydrolysat aus Aminoethylaminopropyltrimethoxysilan (DYNASYLAN® DAMO) und Methyltriethoxysilan (MTES) im molaren Verhältnis 1 : 1, hergestellt über unvollständige Hydrolyse und Auflösen in Wasser (entsprechend US 5 073 195)

In der oben beschriebenen Apparatur werden 222 g DAMO mit 178 g MTES gemischt und mit 24 g Wasser versetzt. Anschließend destilliert man nach 1 h Rühren bei ca. 60 °C die Hydrolysealkohole (ca. 100 g eines Methanol/Ethanol-Gemisches) unter Vakuum ab. Das verbleibende viskose Produkt wird in 1 676 g Wasser gelöst.

Nach einem Tag Lagerdauer enthält das Produkt ca. 7 Gew.-% freie Alkohole. Der Flammpunkt der Lösung liegt unter 60 °C. Nach ca. 10 Tagen Lagerdauer stellt sich eine deutliche Trübung ein, die sich mit zunehmender Lagerdauer intensiviert.

## Patentansprüche

1. Organopolysiloxan-haltige Zusammensetzungen auf Wasserbasis, die im wesentlichen frei von organischen Lösemitteln sind, einen Flammpunkt von mehr als 70 °C besitzen und bei Verdünnen mit Wasser im wesentlichen keine Alkohole durch Hydrolyse freisetzen, wobei der Alkohol-Gehalt in den Zusammensetzungen weniger als 5 Gew.-% beträgt, erhältlich durch

   - Mischen von Q Molen wasserlöslicher Aminoalkylalkoxysilane der allgemeinen Formel I

   $$R - Si\,(R^1)_y\,(OR^{1*})_{3-y} \qquad (I)$$

   mit M Molen nicht wasserlöslicher Alkylalkoxysilane der aligemeinen Formel II

   $$R^2 - Si\,(OR^{1**})_3 \qquad (II),$$

   wobei R eine aminofunktionelle organische Gruppe der allgemeinen Formel III

   $$[Z_{(f+c\cdot f^*)}]^{(f+c\cdot f^*)-}[A_dNH_{(2+f-d)}-[(CH_2)_a-NA^1{}_eH_{(1-e+f^*)}-]_c(CH_2)_b-]^{(f+c\cdot f^*)+} \qquad (III),$$

   wobei $1 \le a \le 6$, $1 \le b \le 6$, $0 \le c \le 6$, $0 \le d \le 2$, $0 \le e \le 1$, $0 \le f \le 1$, $0 \le f^* \le 1$ ist,
   A und $A^1$ einen Benzyl- oder Vinylbenzyl-Rest darstellen, N ein Stickstoffatom symbolisiert und Z ein einwertiger anorganischer oder organischer Säurerest ist,

   $R^1$, $R^{1*}$ und $R^{1**}$ einen Methyl- oder Ethyl-Rest und
   $R^2$ einen linearen oder cyclischen oder verzweigten Alkylrest mit 1 bis 6 C-Atomen oder eine Ureido-Alkylgruppe der allgemeinen Formel IV

   $$NH_2 - CO - NH - (CH_2)_b - , \text{ mit } 1 \le b \le 6, \qquad (IV)$$

   darstellt und
   $0 \le y \le 1$ ist,

   - in dem molaren Verhältnis $0 < M/Q \le 2$,
   - Versetzen des Gemisches mit Wasser,
   - Einstellen des pH-Wertes der Reaktionsmischung auf einen Wert zwischen 1 und 8 und
   - Entfernen des bereits vorhandenen und/oder bei der Umsetzung entstandenen Alkohols.

2. Organopolysiloxan-haltige Zusammensetzungen nach Anspruch 1,
   **dadurch gekennzeichnet,**
   **daß** diese einen pH-Wert zwischen 1 und 8 aufweisen.

3. Organopolysiloxan-haltige Zusammensetzungen nach den Ansprüchen 1 und 2,
   **dadurch gekennzeichnet,**
   **daß** diese eine einwertige anorganische und/oder organische Säure und/oder deren Folgeprodukte enthalten.

4. Organopolysiloxan-haltige Zusammensetzungen nach den Ansprüchen 1 bis 3,
   **dadurch gekennzeichnet,**
   **daß** diese eine Silikonharz-Suspension enthalten.

5. Verfahren zur Herstellung von Organopolysiloxan-haltigen Zusammensetzungen nach den Ansprüchen 1 bis 4,
   **dadurch gekennzeichnet,**
   **daß** man

- Q Mole wasserlöslicher Aminoalkylalkoxysilane der allgemeinen Formel I

$$R - Si (R^1)_y (OR^{1*})_{3-y} \quad (I)$$

mit M Molen nicht wasserlöslicher Alkylalkoxysilane der allgemeinen Formel II

$$R^2 - Si (OR^{1**})_3 \quad (II),$$

wobei R eine aminofunktionelle organische Gruppe der allgemeinen Formel III

$$[Z_{(f+c \cdot f^*)}]^{(f+c \cdot f^*)-}[A_dNH_{(2+f-d)}-[(CH_2)_a-NA^1{}_eH_{(1-e+f^*)}-]_c(CH_2)_b-]^{(f+c \cdot f^*)+} \quad (III),$$

wobei $1 \le a \le 6$, $1 \le b \le 6$, $0 \le c \le 6$, $0 \le d \le 2$, $0 \le e \le 1$, $0 \le f \le 1$, $0 \le f^* \le 1$ ist, A und $A^1$ einen Benzyl- oder Vinylbenzyl-Rest darstellen, N ein Stickstoffatom symbolisiert und Z ein einwertiger anorganischer oder organischer Säurerest ist,

$R^1$, $R^{1*}$ und $R^{1**}$ einen Methyl- oder Ethyl-Rest und $R^2$ einen linearen oder cyclischen oder verzweigten Alkylrest mit 1 bis 6 C-Atomen oder eine Ureido-Alkylgruppe der allgemeinen Formel IV

$$NH_2 - CO - NH - (CH_2)_b - , \text{ mit } 1 \le b \le 6, \quad (IV)$$

darstellt und
$0 \le y \le 1$ ist,

- in dem molaren Verhältnis $0 < M/Q \le 2$ mischt, das Gemisch mit Wasser versetzt,
- den pH-Wert der Reaktionsmischung auf einen Wert zwischen 1 und 8 einstellt,
- den bereits vorhandenen und/oder bei der Umsetzung entstandenen Alkohol entfernt.

**6.** Verfahren nach Anspruch 5,
**dadurch gekennzeichnet,**
**daß** das Reaktionsgemisch mit 0,5 bis 30 Molen Wasser pro Mol der eingesetzten Aminoalkylalkoxysilane der allgemeinen Formel I und der Alkylalkoxysilane der allgemeinen Formel II versetzt wird.

**7.** Verfahren nach den Ansprüchen 5 bis 6,
**dadurch gekennzeichnet,**
**daß** dem Reaktionsgemisch eine einbasige Säure zugegeben wird.

**8.** Verfahren nach den Ansprüchen 5 bis 7,
**dadurch gekennzeichnet,**
**daß** die Umsetzung in einem Temperaturbereich zwischen 0 und 100 °C durchgeführt wird.

**9.** Verfahren nach den Ansprüchen 5 bis 8,
**dadurch gekennzeichnet,**
**daß** man bereits vorhandenen und/oder bei der Umsetzung entstandenen Alkohol destillativ entfernt und dabei gleichzeitig Wasser in dem Maße zugibt, wie Alkohol aus dem Reaktionsmedium entfernt wird.

**10.** Verfahren nach den Ansprüchen 5 bis 9,
**dadurch gekennzeichnet,**
**daß** die destillative Abtrennung des Alkohols unter vermindertem Druck durchgeführt wird.

**11.** Verfahren nach den Ansprüchen 5 bis 10,
**dadurch gekennzeichnet,**
**daß** die destillative Abtrennung des Alkohols solange durchgeführt wird, bis im Kopf der Kolonne eine Temperatur erreicht ist, die der Siedetemperatur von Wasser entspricht.

**12.** Verfahren nach den Ansprüchen 5 bis 11,
**dadurch gekennzeichnet,**
**daß** zur Verminderung der Schaumbildung vor und/oder während der destillativen Abtrennung des Alkohols ein Entschäumer zugesetzt wird.

**13.** Verfahren nach den Ansprüchen 5 bis 12,
**dadurch gekennzeichnet,**
**daß** der Restgehalt an Alkohol in den Organopolysiloxan-haltigen Zusammensetzungen auf < 5 Gew.-% eingestellt wird.

**14.** Verfahren nach den Ansprüchen 5 bis 13,
**dadurch gekennzeichnet,**
**daß** das erhaltene Produkt nach der destillativen Abtrennung des Alkohols durch Sedimentation und/oder Filtration nachgereinigt wird.

**15.** Verwendung der Organopolysiloxan-haltigen Zusammensetzungen auf Wasser-Basis nach den Ansprüchen 1 bis 14

für die Hydrophobierung von Oberflächen,
für die Hydrophobierung von mineralischen Baustoffen,
für den Schutz von Bauten und Fassaden,
für die Beschichtung von Glasfasern,
für die Silanierung von Füllstoffen,
für die Verbesserung der rheologischen Eigenschaften von Polymerdispersionen und Emulsionen,
für die Hydrophobierung von Textilien, Leder, Zellulose- und Stärkeprodukten,
als Haftvermittler,
als Trennmittel,
als Vernetzer,
als Zusatzstoffe für Farben und Lacke.

## Claims

**1.** A water-based organopolysiloxane-containing composition which is essentially free from organic solvents, has a flash point of more than 70°C and essentially liberates no alcohols by hydrolysis on dilution with water, the alcohol content in the composition being less than 5% by weight, obtainable by

- mixing Q mol of water-soluble aminoalkylalkoxysilane of the general formula I

$$R - Si (R^1)_y (OR^{1^*})_{3-y} \qquad (I)$$

with M mol of water-insoluble alkylalkoxysilane of the general formula II

$$R^2 - Si (OR^{1^{**}})_3 \qquad (II)$$

where R is an amino-functional organic group of the general formula III

$$[Z_{(f+c \cdot f^*)}]^{(f+c \cdot f^*)-}[A_d NH_{(2+f-d)}-[(CH_2)_a-NA^1{}_e H_{(1-e+f^*)}-]_c (CH_2)_b-]^{(f+c \cdot f^*)+} \qquad (III)$$

where $1 \leq a \leq 6$, $1 \leq b \leq 6$, $0 \leq c \leq 6$, $0 \leq d \leq 2$, $0 \leq e \leq 1$, $0 \leq f \leq 1$, $0 \leq f^* \leq 1$,
A and $A^1$ are a benzyl or vinylbenzyl radical, N symbolizes a nitrogen atom and Z is a monovalent inorganic or organic acid radical,

$R^1$, $R^{1*}$ and $R^{1**}$ are a methyl or ethyl radical and
$R^2$ is a linear or cyclic or branched alkyl radical having 1 to 6 C atoms or a ureido-alkyl group of the general formula IV

$$NH_2 - CO - NH - (CH_2)_b - \text{, where } 1 \leq b \leq 6, \qquad \text{(IV)}$$

and
$0 \leq y \leq 1$,

- in the molar ratio of $0 < M/Q \leq 2$,
- adding water to the mixture,
- adjusting the pH of the reaction mixture to a value of between 1 and 8 and
- removing the alcohol already present and/or formed during the reaction.

**2.** An organopolysiloxane-containing composition according to claim 1, **characterized in that** this has a pH of between 1 and 8.

**3.** An organopolysiloxane-containing composition according to either of claims 1 and 2, **characterized in that** this comprises a monobasic inorganic and/or organic acid and/or secondary products thereof.

**4.** An organopolysiloxane-containing composition according to any of claims 1 to 3, **characterized in that** this comprises a silicone resin suspension.

**5.** A process for the preparation of an organopolysiloxane-containing composition according to any of claims 1 to 4, **characterized in that**

- Q mol of water-soluble aminoalkylalkoxysilane of the general formula I

$$R - Si\,(R^1)_y\,(OR^{1*})_{3-y} \qquad \text{(I)}$$

are mixed with M mol of water-insoluble alkylalkoxysilane of the general formula II

$$R^2 - Si\,(OR^{1**})_3 \qquad \text{(II),}$$

where R is an amino-functional organic group of the general formula III

$$[Z_{(f+c\cdot f^*)}]^{(f+c\cdot f^*)-}[A_dNH_{(2+f-d)}\text{-}[(CH_2)_a\text{-}NA^1{}_eH_{(1-e+f^*)}\text{-}]_c(CH_2)_b\text{-}]^{(f+c\cdot f^*)+} \qquad \text{(III)}$$

where $1 \leq a \leq 6$, $1 \leq b \leq 6$, $0 \leq c \leq 6$, $0 \leq d \leq 2$, $0 \leq e \leq 1$, $0 \leq f \leq 1$, $0 \leq f^* \leq 1$,
A and $A^1$ are a benzyl or vinylbenzyl radical,
N symbolizes a nitrogen atom and Z is a monovalent inorganic or organic acid radical,

$R^1$, $R^{1*}$ and $R^{1**}$ are a methyl or ethyl radical and
$R^2$ is a linear or cyclic or branched alkyl radical having 1 to 6 C atoms or a ureido-alkyl group of the general formula IV

$$NH_2 - CO - NH - (CH_2)_b - \text{, where } 1 \leq b \leq 6, \quad (IV)$$

and
$0 \leq y \leq 1$,

- in the molar ratio of $0 < M/Q \leq 2$,
- water is added to the mixture,
- the pH of the reaction mixture is brought to a value of between 1 and 8 and
- the alcohol already present and/or formed during the reaction is removed.

**6.** A process according to claim 5, **characterized in that** 0.5 to 30 mol of water per mole of the aminoalkylalkoxysilane of the general formula I employed and of the alkylalkoxysilane of the general formula II are added to the reaction mixture.

**7.** A process according to either of claims 5 and 6, **characterized in that** a monobasic acid is added to the reaction mixture.

**8.** A process according to any of claims 5 to 7, **characterized in that** the reaction is carried out in a temperature range between 0 and 100°C.

**9.** A process according to any of claims 5 to 8, **characterized in that** alcohol already present and/or formed during the reaction is removed by distillation, and during this procedure water is simultaneously added at the rate at which alcohol is removed from the reaction medium.

**10.** A process according to any of claims 5 to 9, **characterized in that** the removal of the alcohol by distillation is carried out under reduced pressure.

**11.** A process according to any of claims 5 to 10, **characterized in that** the removal of the alcohol by distillation is continued until a temperature which corresponds to the boiling point of water is reached in the top of the column.

**12.** A process according to any of claims 5 to 11, **characterized in that** a defoamer is added to reduce foaming before and/or during the removal of the alcohol by distillation.

**13.** A process according to any of claims 5 to 12, **characterized in that** the residual content of alcohol in the organopolysiloxane-containing composition is adjusted to < 5% by weight.

**14.** A process according to any of claims 5 to 13, **characterized in that**, after the removal of the alcohol by distillation, the resulting product is further purified by sedimentation and/or filtration.

**15.** The use of the water-based organopolysiloxane-containing composition according to any of claims 1 to 14 for hydrophobicizing surfaces, for hydrophobicizing mineral building materials, for protecting buildings and facades, for coating glass fibres, for silanizing fillers, for improving the rheological properties of polymer dispersions and emulsions, for hydrophobicizing textiles, leather and cellulose and starch products, as adhesion promoters, as release agents, as crosslinking agents and as additives for paints and varnishes.

**Revendications**

**1.** Compositions contenant un organopolysiloxane à base aqueuse, qui sont pour l'essentiel dépourvues de solvant organique, qui possèdent un point de flamme de plus de 70°C, et qui ne libèrent par dilution avec de l'eau pour l'essentiel, aucun alcool par hydrolyse, pour lesquelles la teneur en alcool dans les compositions s'élève à moins de 5 % en poids, accessibles par :

- mélange de Q moles d'un aminoalkylalkoxysilane soluble dans l'eau de formule générale I

$$R\text{-}Si\,(R^1)_y\,(OR^{1^*})_{3-y} \qquad (I)$$

avec M moles d'un alkylalkoxysilane non soluble dans l'eau, de formule générale II

$$R^2\text{-}Si\,(OR^{1^{**}})_3 \qquad (II)$$

dans laquelle R est un groupe organique fonctionnalisé par un amino de formule générale III

$$[Z_{(f+c\cdot f^*)}]^{(f+c\cdot f^*)-}[A_dNH_{(2+f-d)}\text{-}[(CH_2)_a\text{-}NA^1{}_eH_{(1-e+f^*)}\text{-}]_c(CH_2)_b\text{-}]^{(f+c\cdot f^*)+} \qquad (III)$$

dans laquelle $1 \le a \le 6$, $1 \le b \le 6.0 \le c \le 6{,}0 \le d \le 2$. $0 \le e \le 1$, $0 \le f \le 1$, $0 \le f \le 1$,
A et $A^1$ représentent un reste benzyle ou vinylbenzyle, N symbolise un atome d'azote et Z est un reste d'acide minéral ou organique monovalent.
R, $R^{1^*}$ et $R^{1^{**}}$ représentent un reste méthyle ou éthyle et $R^2$ un reste alkyle linéaire ou cyclique ou ramifié ayant de 1 à 6 atomes de carbone ou est un groupe uréidoalkyle de formule générale IV

$$NH_2\text{-}CO\text{-}NH\text{-}(CH_2)_b$$

avec $1 \le b \le 6$

et $0 \le y \le 1$ (IV)

- dans le rapport molaire $0 \le M/Q \le 2$
- addition du mélange à de l'eau,
- ajustement de la valeur du pH du mélange réactionnel à une valeur comprise entre 1 et 8 et
- élimination de l'alcool déjà présent et/ou formé au cours de la réaction.

**2.** Compositions contenant un organopolysiloxane selon la revendication 1,
**caractérisées en ce que**
celles-ci possèdent une valeur de pH comprise entre 1 et 8.

**3.** Compositions contenant un organopolysiloxane selon les revendications 1 et 2,
**caractérisées en ce que**
celles-ci renferment un acide minéral et/ou organique monovalent et/ou des produits secondaires.

**4.** Compositions contenant un organopolysiloxane selon les revendications 1 à 3,
**caractérisées en ce que**
celles-ci renferment une suspension de résine de silicone.

**5.** Procédé de préparations de compositions contenant un organopolysiloxane selon les revendications 1 à 4,
**caractérisé en ce qu'**

- on mélange Q mol d'un amino alkylalkoxysilane soluble dans l'eau de formula générale I

$$R\text{ - }Si\,(R^1)_y\,(OR^{1^*})_{3-y} \qquad (I)$$

avec M moles d'alkylalkoxysilane non soluble dans l'eau, de formula générale II

$$R^2\text{ - }Si\,(OR^{1^{**}})_3 \qquad (II)$$

dans laquelle R est un groupe organique fonctionnalisé par une amine de formule générale III

$$[Z_{(f+c\cdot f^*)}]^{(f+c\cdot f^*)}[A_dNH_{(2+f-d)}-[(CH_2)_a-NA^1{}_eH_{(1-e+f^*)}-]_c(CH_2)_b-]^{(f+c\cdot f^*)+} \quad (III)$$

dans laquelle $1 \leq a \leq 6$, $1 \leq b \leq 6$, $0 \leq c \leq 6$, $0 \leq d \leq 2$, $0 \leq e \leq 1$, $0 \leq f \leq 1$, $0 \leq f \leq 1$,

A et $A^1$ représentent un reste benzyle ou vinylbenzyle, N symbolise un atome d'azote et Z est un reste d'acide minéral ou organique monovalent, $R^1$, $R^{1*}$ et $R^{1**}$ sont un reste méthyle ou éthyle et $R^2$ représente un reste alkyle linéaire ou cyclique ou ramifié ayant de 1 à 6 atomes de carbone ou un groupe uréidoalkyle de formule générale IV

$$NH_2 - CO - NH - (CH_2)_b - \text{avec} \leq 1 \leq b \leq 6$$

et $0 \leq y \leq 1$

- dans le rapport molaire $0 \leq M/Q \leq 2$
- on additionne le mélange avec de l'eau,
- on ajuste la valeur du pH du mélange réactionnel à une valeur comprise entre et 8
- on chasse l'alcool déjà présent et/ou formé au cours de la réaction.

**6.** Procédé selon la revendication 5,
**caractérisé en ce que**
le mélange réactionnel est additionné de 0,5 à 30 moles d'eau par mol d'aminoalkylalkoxysilanes mis en oeuvre, de formule générale I et d'alkylalkoxysilanes de formule générale II.

**7.** Procédé selon les revendications 5 à 6,
**caractérisé en ce que**
on ajoute au mélange réactionnel un acide monobasique.

**8.** Procédé selon les revendications 5 à 7,
**caractérisé en ce que**
la réaction est effectuée dans une zone de température comprise entre 0 et 100°C.

**9.** Procédé selon les revendications 5 à 8,
**caractérisé en ce que**
on chasse par distillation l'alcool déjà présent et/ou formé au cours de la réaction, et on ajoute pour cela en même temps de l'eau dans la même mesure que l'alcool est chassé du milieu réactionnel.

**10.** Procédé selon les revendications 5 à 9,
**caractérisé en ce que**
on effectue la séparation par distillation de l'alcool sous pression réduite.

**11.** Procédé selon les revendications 5 à 10,
**caractérisé en ce qu'**
on effectue la séparation par distillation de l'alcool jusqu'à ce qu'on atteigne à la tête de la colonne, une température qui correspond à la température d'ébullition de l'eau.

**12.** Procédé selon les revendications 5 à 11,
**caractérisé en ce qu'**
on ajoute un agent anti-mousse pour diminuer la formation de mousse avant et/ou pendant la séparation par distillation.

**13.** Procédé selon les revendications 5 à 12,
**caractérisé en ce qu'**
on ajuste la teneur résiduelle en alcool à <5 % en poids dans les préparations contenant un organopolysiloxane.

**14.** Procédé selon les revendications 5 à 13,
**caractérisé en ce qu'**
on repurifie le produit obtenu après la séparation par distillation de l'alcool par sédimentation et/ou filtration.

**15.** Utilisation des compositions contenant un organopolysiloxane à base aqueuse selon les revendications 1 à 14, pour rendre hydrophobes les surfaces, pour rendre hydrophobes les éléments de construction minéraux, pour la protection de constructions et de façades, pour le revêtement des fibres de verre, pour silaniser les substances de remplissage, pour améliorer les propriétés théologiques de dispersions de polymères et d'émulsions, pour rendre hydrophobes les textiles, le cuir, les produits cellulosiques et amylacés, comme adjuvant d'adhésion, comme agent de séparation, comme agent réticulant, comme substances d'addition pour des couleurs et des laques.